# EUROPEAN PATENT APPLICATION

(11) **EP 4 181 291 A1**
(43) Date of publication of application: **17.05.2023**
(21) Application number: 21838203.4
(22) Date of filing: 28.04.2021
(51) Int. Cl.: H01M 50/242

(54) **VEHICLE AND BATTERY PACK THEREOF**

(30) Priority: 09.07.2020 CN 202010659620
(71) Applicant: BYD Company Limited, Shenzhen, Guangdong 518118 (CN)
(72) Inventor: WANG, Huanhuan, Shenzhen, Guangdong 518118 (CN); LIU, Kai, Shenzhen, Guangdong 518118 (CN); HUANG, Muqing, Shenzhen, Guangdong 518118 (CN); LAI, Qing, Shenzhen, Guangdong 518118 (CN)
(74) Representative: Arnold & Siedsma
(86) International application number: PCT/CN2021/090550
(87) International publication number: WO 2022/007482

(57) **Abstract**

A vehicle and a battery pack thereof are provided. The battery pack includes a tray (10), a pressing plate (20), and multiple cells (30) arranged in an array. An accommodating space (40) is formed in the tray (10). The multiple cells (30) are accommodated in the accommodating space (40). The pressing plate (20) is pressed against the multiple cells (30). Two opposite ends of the pressing plate (20) are both fixed to the tray (10).

## Description

### CROSS-REFERENCE TO RELATED APPLICATIONS

The present disclosure claims priority to Chinese Patent Application No. 202010659620.1, entitled "VEHICLE AND BATTERY PACK THEREOF" and filed by BYD Co., Ltd. on July 9, 2020.

### FIELD

The present disclosure relates to the technical field of batteries, and more specifically, to a vehicle and a battery pack thereof.

### BACKGROUND

Multiple cells in the existing battery pack are fixedly connected by adhesive, and when the battery pack vibrates and impacts, the adhesive may fail and cause relative displacement among the cells, which may lead to potential safety hazards of the battery pack.

### SUMMARY

The present disclosure is intended to provide a vehicle and a battery pack thereof, so as to solve the technical problem that when the battery pack vibrates and impacts, the adhesive may fail and cause relative displacement among cells, which may lead to potential safety hazards of the battery pack.

The present disclosure provides a battery pack, including a tray, a pressing plate, and multiple cells arranged in an array. An accommodating space is formed in the tray, the multiple cells are accommodated in the accommodating space, the pressing plate is pressed against the multiple cells, and two opposite ends of the pressing plate are both fixed to the tray.

The battery pack further includes a pull plate fixed to the tray, the two opposite ends of the pressing plate include a first end, the first end of the pressing plate is connected with the pull plate, and the first end of the pressing plate is fixed to the tray through the pull plate.

The battery pack further includes a first pull rod fixed to the tray, and the two opposite ends of the pressing plate further include a second end. The second end is arranged opposite to the first end, the second end of the pressing plate is connected with the first pull rod, and the second end of the pressing plate is fixed to the tray through the first pull rod.

The tray includes a bottom plate and a side beam arranged on the bottom plate. The bottom plate and the side beam define the accommodating space. An opening is arranged on the side beam. A protrusion extends from the side beam in the opening. The pull plate is fixed to the bottom plate, and the protrusion is fixedly connected with the pull plate. The first pull rod is fixed to the bottom plate, and the first pull rod is fixedly connected with the side beam.

The battery pack further includes a second pull rod, and multiple intermediate crossbars arranged at intervals are arranged on the bottom plate. Each of the intermediate crossbars is provided with the second pull rod, and the second pull rods extend through gaps among the multiple cells and are connected with the pressing plate.

The battery pack further includes a limiting block. The limiting block is arranged between two adjacent cells, so that a gap is formed between two adjacent cells. In an extending direction of the cells, the gap includes a middle portion and edge portions located on two sides of the middle portion. The limiting block is located in each of the edge portions, and the second pull rod extends through the middle portion and is connected with the pressing plate.

A cross-sectional area of the pull plate is greater than a cross-sectional area of the first pull rod, and the cross-sectional area of the pull plate is greater than a cross-sectional area of the second pull rod.

Multiple pull plates are arranged, multiple first pull rods are arranged, and multiple second pull rods are arranged on the each intermediate crossbar.

Each of the cells includes a top surface. A positive pole and a negative pole spaced apart from each other are arranged on the top surface, and the top surfaces of the multiple cells form a mounting surface.

The battery pack further includes a top cover plate and an insulating cover. The top cover plate is mounted to the mounting surface, and the insulating cover is mounted to the top cover plate.

The present disclosure provides a vehicle, including the above battery pack.

Based on the above, in the present disclosure, the pressing plate is arranged to be pressed against multiple cells, the opposite ends of the pressing plates are both fixed to the tray, and the pressing plate fixes the multiple cells in the tray, so that even if the battery pack vibrates and impacts, the cells will not move relative to each other, which will not lead to potential safety hazards of the battery pack. Moreover, the pressing plate is pressed against the multiple cells, which can also avoid swelling of the cells during operation.

### BRIEF DESCRIPTION OF THE DRAWINGS

To describe the technical solutions of the embodiments of this disclosure or the related art more clearly, the following briefly introduces the accompanying drawings required for describing the embodiments or the related art. Apparently, the accompanying drawings in the following description show only some embodiments of this disclosure, and a person of ordinary skill in the art may still derive other accompanying drawings from these accompanying drawings without creative efforts.

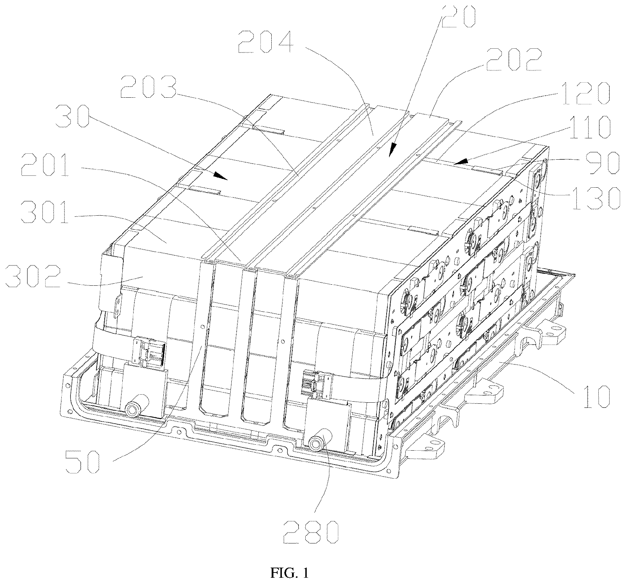

FIG. 1 is a schematic structural diagram of a battery pack according to an embodiment of the present disclosure.

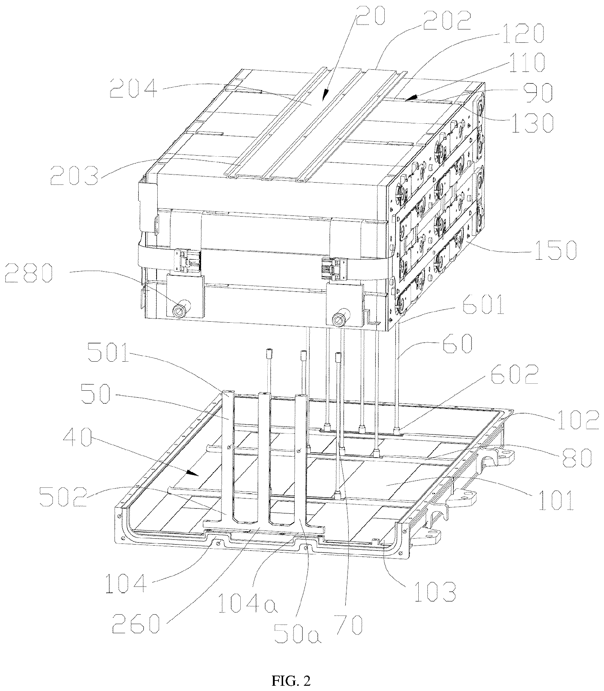

FIG. 2 is a schematic diagram of a disassembled structure of the battery pack in FIG. 1.

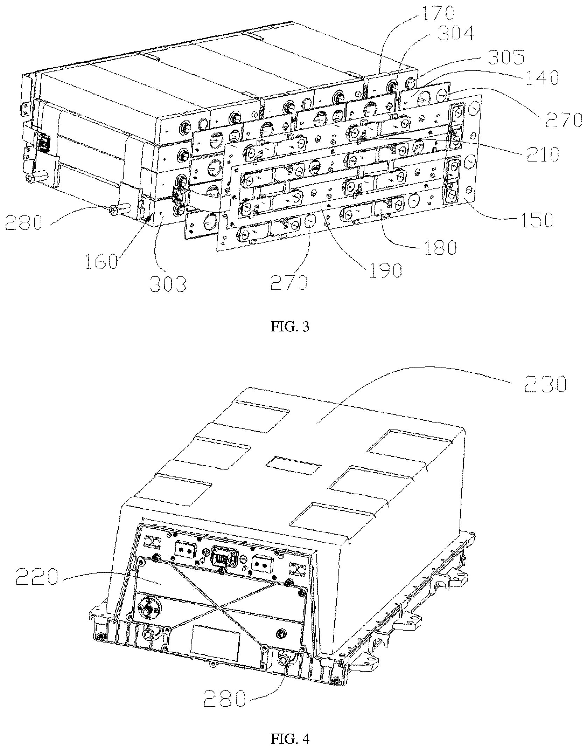

FIG. 3 is a schematic diagram of another disassembled structure of the battery pack in FIG. 1.
FIG. 4 is a structural schematic diagram of a front cover and a sealing cover of the battery pack in FIG. 1.

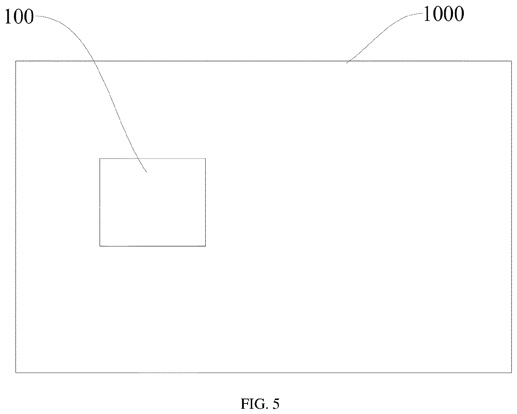

FIG. 5 is a schematic diagram of a relationship between a battery pack and a vehicle according to an embodiment of the present disclosure.

### DETAILED DESCRIPTION

The technical solutions in the embodiments of this disclosure are clearly and completely described in the following with reference to the accompanying drawings in the embodiments of this disclosure. Apparently, the described embodiments are merely some embodiments of this disclosure rather than all of the embodiments. All other embodiments obtained by persons of ordinary skill in the art based on the embodiments of the present disclosure without creative efforts shall fall within the protection scope of the present disclosure.

The present disclosure provides a vehicle 1000, including a battery pack 100. The battery pack 100 is to be described below.

The battery pack 100 includes a tray 10, a pressing plate 20, and multiple cells 30 arranged in an array. An accommodating space 40 is formed in the tray 10. The multiple cells 30 are accommodated in the accommodating space 40, the pressing plate 20 is pressed against the multiple cells 30, and two opposite ends of the pressing plate 20 are both fixed to the tray 10.

In the present disclosure, the pressing plate 20 is arranged to be pressed against the multiple cells 30, the two opposite ends of the pressing plate 20 are both fixed to the tray 10, and the pressing plate 20 fixes the multiple cells 30 in the tray 10, so that even if the battery pack 100 vibrates and impacts, the cells 30 will not move relative to each other, which will not lead to potential safety hazards of the battery pack 100. Moreover, the pressing plate 20 is pressed against the multiple cells 30, which can also avoid swelling of the cells 30 during operation.

It may be understood that each of the cells 30 includes two first side surfaces 301 with a large area, two second side surfaces 302 with a small area, a top surface 303, and a bottom surface. An area of each of the first side surfaces 301 is greater than an area of each of the second side surfaces 302. The two first side surfaces 301 are opposite to each other, and the two second side surfaces 302 are opposite to each other. The top surface 303 and the bottom surface are opposite to each other, and the two first side surfaces 301 and the two second side surfaces 302 are alternately connected to form the side surface of the cell 30. The side surface of the cell 30 is connected with the top surface 303 and the bottom surface. A positive pole 304 and a negative pole 305 spaced apart from each other are arranged on the top surface 303 of each of the cells 30.

In the present disclosure, the pressing plate 20 is pressed against the first side surface 301 of the cell 30, and the pressing plate 20 is pressed against the first side surface 301 of the cell 30 to prevent the first side surface 301 of the cell 30 from expanding.

The battery pack 100 further includes a pull plate 50 fixed to the tray 10. The two opposite ends of the pressing plate 20 include a first end 201. The first end 201 of the pressing plate 20 is connected with the pull plate 50, and the first end 201 of the pressing plate 20 is fixed to the tray 10 through the pull plate 50. In an embodiment, the pull plate 50 includes a third end 501 and a fourth end 502 opposite to each other. The third end 501 is connected with the first end 201, and the fourth end 502 is fixedly connected with the tray 10. It may be understood that the first end 201 of the pressing plate 20 is detachably or fixedly connected with the third end 501 of the pull plate 50, and the fourth end 502 of the pull plate 50 is fixedly connected with the tray 10. Therefore, according to the present disclosure, the first end 201 of the pressing plate 20 is fixed to the tray 10 through the arrangement of the pull plate 50, so that the pressing plate 20 can be pressed against the cells 30.

In an embodiment, the pull plate 50 is attached to the cell 30, and the pull plate 50 is pressed against the cell 30. In an embodiment, the pull plate 50 is attached to and pressed against the second side surface 302 of the cell 30 close to the first end 201 of the pressing plate 20. Therefore, the pull plate 50 is attached to and pressed against the cell 30, which not only can further prevent the relative displacement between the cells 30, but also can prevent the second side surface 302 of the cell 30 from expanding.

The battery pack 100 further includes a first pull rod 60 fixed to the tray 10. The two opposite ends of the pressing plate 20 further include a second end 202. The second end 202 is arranged opposite to the first end 201. The second end 202 of the pressing plate 20 is connected with the first pull rod 60. The second end 202 of the pressing plate 20 is fixed to the tray 10 through the first pull rod 60. In an embodiment, the first pull rod 60 includes a fifth end 601 and a sixth end 602 opposite to each other. The fifth end 601 is connected with the second end 202, and the sixth end 602 is fixedly connected with the tray 10. Therefore, according to the present disclosure, the second end 202 of the pressing plate 20 is fixed to the tray 10 through the arrangement of the first pull rod 60, so that the pressing plate 20 can be pressed against the cell 30. It may be understood that the second end 202 of the pressing plate 20 is detachably connected or fixedly connected with the fifth end 601 of the first pull rod 60.

In an embodiment, the first pull rod 60 is attached to the cell 30, and the first pull rod 60 is pressed against the cell 30. In an embodiment, the first pull rod 60 is attached to and pressed against the second side surface 302 of the cell 30 close to the second end 202 of the pressing plate 20. The first pull rod 60 is attached to and pressed against the cell 30, which not only can further prevent the relative displacement between the cells 30, but also can prevent the second side surface 302 of the cell 30 from expanding.

The tray 10 includes a bottom plate 101 and a side beam 102 arranged on the bottom plate 101. The bottom plate 101 and the side beam 102 define the accommodating space 40. An opening 103 is arranged on the side beam 102. A protrusion 104 extends from the side beam 102 in the opening 103. The pull plate 50 is fixed to the bottom plate 101, and the protrusion 104 is fixedly connected with the pull plate 50. The first pull rod 60 is fixed to the bottom plate 101, and the first pull rod 60 is fixedly connected with the side beam 102. Therefore, the pull plate 50 is not only fixedly connected with the bottom plate 101, but also fixedly connected with the protrusion 104 on the side beam 102, so that the connection stability between the pull plate 50 and the tray 10 is better. The first pull rod 60 is not only fixedly connected with the bottom plate 101, but also fixedly connected with the side beam 102, so that the connection stability between the first pull rod 60 and the tray 10 is better. Therefore, when the pressing plate 20 is fixedly connected with the tray 10 through the pull plate 50 and the first pull rod 60, the pressing plate 20 may be fixedly connected to the tray 10, so that the cell 30 can be firmly pressed in the tray 10, thereby avoiding the displacement between the cell 30 and the swelling of the cells 30. It may be understood that the pull plate 50 may also be fixed to the bottom plate 101 through the intermediate crossbar 80 arranged close to the opening 103, and the first pull rod 60 may be fixed to the bottom plate 101 through the intermediate crossbar 80 arranged close to the side beam 102.

In an embodiment, a cross-sectional area of the pull plate 50 is greater than a cross-sectional area of the first pull rod 60, and the cross-sectional area of the pull plate 50 is greater than a cross-sectional area of a second pull rod 70. In an embodiment, a larger space exists between the cell 30 and the side beam 102 with the opening 103, and the larger space may accommodate the pull plate 50 with a larger area. A smaller space exists between the cell 30 and the rest of the side beam 102, and the smaller space is used for accommodating the first pull rod 60 with a smaller area. Therefore, the pull plate 50 with a larger area increases the stability of the connection between the pull plate 50 and the tray 10, and the first pull rod 60 with a smaller area not only may be suitable for the smaller space, but also may be sufficiently fix the pressing plate 20 to the tray 10, so that the pressing plate 20 can be pressed against the cell 30 tightly. It may be understood that the protrusion 104 has a larger area, and the connection between the protrusion 104 with the larger area and the pull plate 50 with the larger area can cause the pull plate 50 to be connected with the tray 10 more firmly. In an embodiment, the protrusion 104 includes a first connecting surface 104a facing the pull plate 50, and the pull plate 50 includes a second connecting surface 50a facing the protrusion 104. An area of the first connecting surface 104a is greater than an area of the second connecting surface 50a.

The battery pack 100 further includes a second pull rod 70, and multiple intermediate crossbars 80 arranged at intervals are arranged on the bottom plate 101. Each of the intermediate crossbars 80 is provided with the second pull rod 70, and the second pull rods 70 extend through gaps 110 among the multiple cells 30 and are connected with the pressing plate 20. In an embodiment, the arrangement of the multiple intermediate crossbars 80 and the second pull rods 70 divides the accommodating space 40 into multiple subspaces. Each of the subspaces only needs to accommodate a small number of cells 30, so that the cells 30 in the each subspace are less prone to relative displacement. Moreover, the second pull rod 70 on each of the intermediate crossbars 80 is connected with the pressing plate 20, and the pressing plate 20 can be pressed against the cell 30 in the each subspace. Therefore, the arrangement of the multiple intermediate crossbars 80 and the second pull rod 70 on the each intermediate crossbar 80 can further prevent the expansion of the cells 30 and the relative displacement between the cells 30. It may be understood that the second pull rod 70 is detachably or fixedly connected with the pressing plate 20. The tray 10 may be fixed to the pull plate 50 by welding, and the first pull rod 60 may be fixed to the second pull rod 70 by welding. For example, the pull plate 50 may be fixed to the protrusion 104 and the bottom plate 101 by welding, the first pull rod 60 may be fixed to the side beam 102 and the bottom plate 101 by welding, and the second pull rod 70 may be fixed to the intermediate crossbar 80 by welding.

The battery pack 100 further includes a limiting block 90. The limiting block 90 is arranged between two adjacent cells 30, so that a gap 110 is formed between two adjacent cells 30. In an extending direction of the cells 30, the gap 110 includes a middle portion 120 and edge portions 130 located on two sides of the middle portion 120. The limiting block 90 is located in the edge portion 130, and the second pull rod 70 extends through the middle portion 120 and is connected with the pressing plate 20. In an embodiment, in the extending direction of the cells 30, a length of the limiting block 90 is less than a length of the cells 30. When the limiting block 90 is arranged in the gap 110 between adjacent cells 30, the limiting block 90 may be arranged in the edge portion 130, and the middle portion 120 of the gap 110 may be used for the second pull rod 70 to extend through, so that the second pull rod 70 extends through the middle portion 120 of the gap 110 and is connected with the pressing plate 20. Therefore, the gap 110 may be formed between adjacent cells 30 through the arrangement of the limiting block 90, which is convenient for the second pull rod 70 to extend through the gap 110 and be connected with the pressing plate 20. It may be understood that the gap 110 is arranged between every two adjacent cells 30, or the gap 110 is arranged among multiple cells 30, or multiple cells 30 are connected to form a battery module. The gap 110 is arranged between the battery modules. Two edge portions 130 are arranged for each gap 110, and the limiting block 90 is arranged in each of the two edge portions 130.

Multiple pull plates 50 are arranged, multiple first pull rods 60 are arranged, and multiple second pull rods 70 are arranged on the each intermediate crossbar 80. In an embodiment, multiple recesses 203 arranged at intervals are arranged on the pressing plate 20. The recesses 203 are connected by a connecting plate 204, and the recesses 203 are configured to be connected with the pull plates 50 and the first pull rods 60. One end of a bottom of each of the recesses 203 is connected with one of the pull plates 50 and an other end is connected with one of the first pull rods 60. A middle portion of the bottom of the recess 203 is connected with the second pull rod 70. Therefore, the arrangement of the multiple pull plates 50, the multiple first pull rods 60, and the multiple second pull rods 70 causes a larger connection area between the pressing plate 20 and the pull plates 50, a larger connection area between the pressing plate 20 and the first pull rods 60, and a larger connection area between the pressing plate 20 and the second pull rods 70, so that the pressing plate 20 can be firmly pressed against the cells 30. It may be understood that the multiple pull plates 50 are connected to an end of the bottom plate 101, or an end of the multiple pull plates 50 facing the bottom plate 101 is connected by a connecting portion 260. The connecting portion 260 may be fixed to the protrusion 104 or the bottom plate 101. Because the connecting portion 260 is connected with ends of the pull plates 50, an area of the connecting portion 260 is larger, and the arrangement of the connecting portion 260 further increases the stability of the connection between the pull plates 50 and the tray 10. In an embodiment, the area of the first connecting surface 104a of the protrusion 104 is less than the area of the connecting portion 260.

In a specific embodiment, three recesses 203 are arranged, three pull plates 50 are arranged, three first pull rods 60 are arranged, and three second pull rods 70 are arranged on the each intermediate crossbar 80.

The top surfaces 303 of the multiple cells 30 form a mounting surface 160. The battery pack 100 further includes a top cover plate 140 and an insulating cover 150. The top cover plate 140 is mounted to the mounting surface 160, and the insulating cover 150 is mounted to the top cover plate 140. In an embodiment, a position on a side surface of the cell 30 close to the top surface 303 is covered with wrapping paper 170. The wrapping paper 170 has a larger width and extends out of the side surface of the cell 30 toward the top surface 303. According to the present disclosure, the top cover plate 140 is arranged on the mounting surface 160, and the wrapping paper 170 extending out of the side surface of the cell 30 may be attached to the top cover plate 140. When the insulating cover 150 is mounted to the top cover plate 140, the wrapping paper 170 does not extend to the insulating cover 150, and the edge of the wrapping paper 170 does not push up the insulating cover 150, so that the mounting is convenient, and the insulating cover 150 will not fall off during later use. Therefore, the top cover plate 140 is arranged on the mounting surface 160, and when the cell 30 is coated, the wrapping paper 170 may extend to the top cover plate 140, so that the wrapping paper 170 is not cocked and does not affect the insulating cover 150, so as to solve the technical problem that the wrapping paper 170 needs to be folded at the top surface 303 of the cell 30, the edge of the wrapping paper 170 is to be cocked, the edge of the wrapping paper 170 may push up the insulating cover 150, a bonding area between the insulating cover 150 and the top surface 303 of the cell 30 is insufficient, and the insulating cover 150 has a risk of falling off. It may be understood that the top cover plate 140 is provided with a snap, and the insulating cover 150 is fixed with the top cover plate 140 by the snap, so that the top cover plate 140 is more reliably connected with the insulating cover 150. The surface of the cell 30 provided with the positive pole 304 and the negative pole 305 is the top surface 303 of the cell.

The battery pack 100 further includes multiple connecting pieces 180 and a flexible printed circuit board (FPC) 190. In an embodiment, the insulating cover 150 is provided with a through hole 270 in direct opposition to the positive pole 304 and the negative pole 305 of each cell 30. The positive pole 304 and the negative pole 305 of the each cell 30 extend into the through hole 270. Each of the connecting pieces 180 is arranged on a surface of the insulating cover 150 facing away from the top cover plate 140, and the each connecting piece 180 connects the positive pole 304 to negative pole 305 of two adjacent cells 30 located in the through hole 270. The FPC 190 is arranged in the gap 110 between the multiple connecting pieces 180 of the insulating cover 150, and the FPC 190 is connected with the each connecting piece 180. In an embodiment, the each connecting piece 180 may be connected with the FPC 190 through an adapter 210. Therefore, when the pressing plate 20 of the present disclosure is pressed against the multiple cells 30, the pressing plate 20 fixes the cells 30, avoiding the relative displacement between the cells 30, and preventing the cells 30 from swelling during operation, thereby preventing the cells 30 from tearing the FPC 190, and preventing the cells 30 from tearing the housing, for example, preventing the cells from tearing the tray 10. It may be understood that the top cover plate 140 is also provided with the through hole 270, and the through hole 270 on the top cover plate 140 is correspondingly in communication with the through hole 270 on the insulating cover 150. The positive pole 304 and the negative pole 305 of the cell 30 are located in the through hole 270 on the insulating cover 150 after extending through the through hole 270 on the top cover plate 140.

The battery pack 100 further includes a front cover 220, a sealing cover 230, and a liquid cooling tube 280. The front cover 220 is mounted to a side of the tray 10 provided with the opening 103. The sealing cover 230 covers the tray 10 to seal the multiple cells 30. The liquid cooling tube 280 is arranged on an outer surface of the cell 30, and configured to dissipate heat of the cell 30. A liquid inlet and a liquid outlet of the liquid cooling tube 280 extend out of the battery pack 100.

During the mounting, the tray 10 is connected with the pull plate 50, the first pull rod 60, and the second pull rod 70 by welding, for example. Insulating sheets are attached to the bottom and the periphery of the tray 10, and glue is applied to gaps of the insulating sheets to fix the cells 30 in the tray 10. The limiting block 90 is arranged between the cells 30, and the battery, the liquid cooling tube, and the integrated wiring harness (including the insulating cover 150, the FPC, and the connecting pieces 180) are assembled and put into the tray 10 through tooling. After the connecting piece 180 is welded to the positive pole 304 and the negative pole 305 of the battery, the pressing plate 20 is mounted, and the pressing plate 20, the first pull rod 60, the second pull rod 70, and the pull plate 50 are respectively fixed by screws. The front cover 220 is mounted, the sealing cover 230 is positioned in place, and the sealing cover 230 and the tray 10 are sealed by gluing and sealing.

What is disclosed above is merely exemplary embodiments of the present disclosure, and certainly is not intended to limit the protection scope of the present disclosure. A person of ordinary skill in the art may understand that all or some of processes that implement the foregoing embodiments and equivalent modifications made in accordance with the claims of the present disclosure shall fall within the scope of the present disclosure.

## Claims

1. A battery pack, comprising a tray, a pressing plate, and a plurality of cells arranged in an array, wherein an accommodating space is formed in the tray; the plurality of cells are accommodated in the accommodating space; the pressing plate is pressed against the plurality of cells; and two opposite ends of the pressing plate are both fixed to the tray.

2. The battery pack according to claim 1, further comprising a pull plate fixed to the tray, wherein the two opposite ends of the pressing plate comprise a first end; the first end of the pressing plate is connected with the pull plate; and the first end of the pressing plate is fixed to the tray through the pull plate.

3. The battery pack according to claim 2, further comprising a first pull rod fixed to the tray, wherein the two opposite ends of the pressing plate further comprise a second end; the second end is arranged opposite to the first end in a length direction; the second end of the pressing plate is connected with the first pull rod; and the second end of the pressing plate is fixed to the tray through the first pull rod.

4. The battery pack according to claim 3, wherein the tray comprises a bottom plate and a side beam arranged on the bottom plate; the bottom plate and the side beam define the accommodating space; an opening is arranged on the side beam; a protrusion extends from the side beam in the opening; the pull plate is fixed to the bottom plate; the protrusion is fixedly connected with the pull plate; the first pull rod is fixed to the bottom plate; and the first pull rod is fixedly connected with the side beam.

5. The battery pack according to claim 4, further comprising a second pull rod, wherein a plurality of intermediate crossbars are arranged at intervals on the bottom plate; each of the intermediate crossbars is provided with the second pull rod; and the second pull rods extend through gaps among the plurality of cells and are connected with the pressing plate.

6. The battery pack according to claim 5, further comprising a limiting block, wherein the limiting block is arranged between two adjacent cells, so that a gap is formed between two adjacent cells; in an extending direction of the cells, the gap comprises a middle portion and edge portions located on two sides of the middle portion; the limiting block is located in each of the edge portions; and the second pull rod extends through the middle portion and is connected with the pressing plate.

7. The battery pack according to claim 5 or 6, wherein a cross-sectional area of the pull plate is greater than a cross-sectional area of the first pull rod; and the cross-sectional area of the pull plate is greater than a cross-sectional area of the second pull rod.

8. The battery pack according to any of claims 5 to 7, wherein a plurality of pull plates are arranged; a plurality of first pull rods are arranged; and a plurality of second pull rods are arranged on the each intermediate crossbar.

9. The battery pack according to any of claims 1 to 8, wherein each of the cells comprises a top surface; a positive pole and a negative pole spaced apart from each other are arranged on the top surface; the top surfaces of the plurality of cells form a mounting surface;
the battery pack further comprises a top cover plate and an insulating cover, wherein the top cover plate is mounted to the mounting surface; and the insulating cover is mounted to the top cover plate.

10. A vehicle, comprising the battery pack according to any of claims 1 to 9.
